# EUROPEAN PATENT APPLICATION

(11) **EP 1 424 530 A1**
(43) Date of publication of application: **02.06.2004**
(21) Application number: 02712720.8
(22) Date of filing: 20.03.2002
(51) Int. Cl.: F25D 29/00

(54) **A REFRIGERATOR WITH SEPARATED MULTI-WAY COOLING CIRCUIT IN PARALLEL AND CONTROLLING METHOD THEREOF**

(30) Priority: 21.03.2001 CN 01215732; 11.06.2001 CN 01228047; 27.02.2002 CN 02102671
(71) Applicant: Guangdong Kelon Electronical Holdings Co., Ltd, 528303 Guang Dong Province (CN)
(72) Inventor: WU, Shiqing, 528303 Guang Dong Province (CN); CHENG, Debin, 528303 Guang Dong Province (CN); PAN, Jian, 528303 Guang Dong Province (CN); DENG, Mingfu, 528303 Guang Dong Province (CN); LI, Chengwu, 528303 Guang Dong Province (CN); CHEN, Xing, 52830 3 Guang Dong Province (CN)
(74) Representative: Henderson, Wendy Agnes
(86) International application number: PCT/CN2002/000178
(87) International publication number: WO 2002/077554

(57) **Abstract**

A refrigerator with separated multi-way cooling circuit in parallel and controlling method thereof comprising N (N>1) cold sections and N corresponding refrigerating branches in parallel each other, every branch connects with a flow rate controlling unit, a throttling device and an evaporator in series, further comprising one or more accumulators preventing suction line from frosting or liquid refrigerant entering the compressor, and a controller controlling every flow rate controlling unit so as to ensure the refrigeration cycle only composed of one refrigerating branch, compressor and condenser at any time, and performing each cold section time-sharing operation independently. The present refrigerator and controlling method realized respectively temperature controlling. switching each other, and on-off solely of two or more cold sections in a refrigerator, therefore saving undesired power consumption, and defining capability of desired temperature section by regulation of user for different desire.

## Description

### FIELD OF THE INVENTION

The present invention relates to a refrigerator particularly relates to a refrigerator having two or more refrigerating chambers, the temperatures of which can be controlled separately, and more particularly relates to a refrigerator with separated multi-way cooling circuit in parallel and controlling method thereof.

### BACKGROUND OF THE INVENTION

The conventional double-door refrigerator has following main disadvantages: one is its futile power and waste of energy, for example, after hot food are stored in the refrigerating chamber, the refrigerating system will be actuated and started. However, the freezing chamber will also be refrigerated at the same time, which will result in a overly low temperature of the freezing chamber. So, the extra cool energy for the freezing chamber is futile power and so causes a waste of energy. Another disadvantage is that the two chambers cannot be controlled independently, i.e. they cannot be closed separately simultaneously. And the last disadvantage is that the freezing chamber has a narrow temperature adjustment range and that the freezing and the refrigerating modes cannot be converted mutually.

The prior art refrigerator cannot be applied economically and efficiently in the vast areas with greatly variable temperatures in China. For example, there is a relatively low temperature in the winter of some areas, close to the temperature of the freezing chamber of the refrigerator. In the Northeastern area of the country, the temperature remains below -15°C for about four months in a year. In this area, customers often use an enclosed balcony as a large natural freezing chamber in place of the freezing chamber. Meanwhile, in some other areas the temperature in spring and autumn is in close proximity to that of the refrigerating chamber. For example, in the Yangtze River Valley the temperature remains below 8°C for about four months in a year. In this area, customers often do not use refrigerating chamber in the spring and autumn. However, the current household refrigerator can result in the waste of energy because it cannot meet the customers' requirement of closing the refrigerating chamber or the freezing chamber separately at will. This shows that the refrigerating chamber and the freezing chamber in a traditional double-door refrigerator cannot work separately; the temperatures of these two chambers cannot be adjusted independently and their relationship of cool energy supplies is basically fixed; these two refrigerating chambers cannot be replaced mutually. The main reason is that the contact relation of the refrigerating evaporator and the freezing evaporator is in a series connection and they work in a series connection means, therefore the refrigerator is unable to control the refrigerating evaporator and the freezing evaporator separately. When the refrigerator starts, the two evaporators work simultaneously. In the current market, there emerges a refrigerator that can control the two evaporators separately, whereas, this kind of refrigerator adopts two sets of separate refrigerating systems, i.e. two compressors, two evaporators, two condensers, and two throttling devices to chill the refrigerating chamber and the freezing chamber, respectively. Thus, the production costs of this kind of refrigerator are excessively high. It makes no difference from two sets of refrigerators except that it uses one shell.

### SUMMORY OF THE INVENTION

An objects of the present invention is to provide a refrigerator and controlling method thereof, which overcomes the disadvantages of the prior art, which provides two or more refrigerating chambers that can work independently by the use single cooling circuit, i.e. control the refrigeration of every refrigerating chamber independently and adjust the temperatures of every refrigerating chamber separately. As to the two refrigerating chambers, the refrigerating chamber and the freezing chamber can be converted mutually or one of them can be shut down at random and the two chambers can operate relatively separately, ensuring that any refrigerating chamber keeps a necessary stable temperature and is not effected by the operating status of the other compartment such as Running/Shutdown, defrosting, door-opening, etc.

According to the present invention, a refrigerator with separated multi-way cooling circuit in parallel is provided. The refrigerator has N (N>1) refrigerating chambers and N refrigerating branches. The N refrigerating branches are in parallel connection with one another and in series connection with the circulating loop of compressor and condenser. Every refrigerating branch is in series connection with a flow control unit, a throttling devices, and a evaporator. The refrigerator further comprises one or more gas-liquid separation devices and a controller. The gas-liquid separation devices can avoid frosting of the air on the surface of the suction line of the compressor or causing liquid slugging of the compressor. By the temperatures detected/detected in all refrigerating chambers and the operating time of the current compartment, the controller can control the start of the flow control units in every refrigerating branch to achieve only one refrigerating branch connects with the cycle defined by the compressor and the condenser. This realizes a time-sharing separate operation of every refrigerating chamber and keeps the respective temperature of every compartment within the preset scope. All the independent refrigerating chambers are equipped with temperature sensors and the evaporator in each compartment can be controlled to ensure the temperatures of the compartments are independent and irrelevant to one another.

In an aspect of the present invention, the refrigerator further comprises M indirect-cooling refrigerating chambers, which are independent mutually. Each indirect-cooling refrigerating chamber has one air flue with air volume control devices. The M air flues are divided into X groups. These groups and the evaporators and fans in X of N separate refrigerating branches form X groups of air passages. The controller control the flow control units in N refrigerating branches, M air volume control devices, and X fans to guarantee that N+M refrigerating chambers keep their independent controllable temperatures.

In the above refrigerator of the invention , all air flues in each group shall be parallel mutually.

In the above refrigerator of the invention, the refrigerator further comprises L subordinate refrigerating chambers, each of which has an evaporator in series connection with one of the N refrigerating branches. The L subordinate refrigerating chambers and the N independent paralleled refrigerating chambers can form N+L temperature-controlled refrigerating chambers.

In the above refrigerator of the invention, the refrigerator further comprises L subordinate refrigerating chambers, N independent paralleled refrigerating chambers, and M indirect-cooling refrigerating chambers can form N+L+M temperature-controlled refrigerating chambers.

In the refrigerator according to the invention, said gas-liquid separation device is located in the above circulating loop.

In the refrigerator according to the invention, said gas-liquid separation device are located separately in the paralleled refrigerating branches.

In the refrigerator according to the invention, said gas-liquid separation devices are located separately in the circulating loops and part of the refrigerating branches.

In the refrigerator according to the invention, every refrigerating chamber is equipped with a temperature sensor.

In the refrigerator according to the invention, the compressor has a refrigerating capacity Q can satisfy the following relationship. The total sum of maximal running time of all the refrigerating chambers (Tᵢₒₘₐₓ) shall not exceed the minimum of the shutdown time (Tᵢₛ) of all the refrigerating chambers (Tᵢₛₘᵢₙ), i.e. ΣTᵢₒₘₐₓ≤Tᵢₛₘᵢₙ.

In the above refrigerator according to the invention, when ΣTᵢₒₘₐₓ>Tᵢₛₘᵢₙ, one or more of the following adjustments can be chosen to satisfy the formula ΣTᵢₒₘₐₓ≤Tᵢₛₘᵢₙ: 1) increasing the thermal insulation layer of those refrigerating chambers with a short shutdown time or all the chambers; 2) increasing the area of evaporators in the compartments; 3) properly lowering the temperature control precision of those compartments with a short shutdown time.

In the refrigerator according to the invention, the controllers provide controlling signals for the flow control units in all the refrigerating branches so that at most one refrigerating branch, the compressor and condenser circuit form a refrigerant cycle at any time on the basis of the real time temperature provided by the temperature sensors in N refrigerating chambers and the temperatures of all the refrigerating chambers preset by customers.

In the refrigerator according to the invention, the flow control units located in the N refrigerating branches are composed of N-1 two-position three-way valves layered in the form of binary tree structure, the roots of "trees" connect to the circulating loops and N nodes of the "tree" connect to the throttling devices located in N refrigerating branches respectively.

In the refrigerator according to the invention, the flow control units located in the N refrigerating branches are composed of N two-way valves that are in series connection with the respective branch.

In the refrigerator according to the invention, the flow control units located in the N refrigerating branches are actualized by valves or valve mixes that have the function of selecting one branch from N branches.

In the refrigerator according to the invention, when N equals to 2, only the evaporator and the throttling device in one of the two branches form a refrigerating circulation with the compressor and the condenser at any time.

In the refrigerator according to the invention, when N equals to 3, only the evaporator and throttling device in one of the three branches form a refrigerating circulation with the compressor and condenser at any time.

In the refrigerator according to the invention, when N equals to 4, only the evaporator, throttling device in one of the four branches form a refrigerating circulation with the compressor and the condenser at any time.

In the refrigerator according to the invention, when N equals to 5, only the evaporator and throttling device in one of the five branches form a refrigerating circulation with the compressor and the condenser at any time.

In the refrigerator according to the invention, wherein each refrigerating chamber comprises a state indicator, which indicates the refrigerating chamber "to be refrigerated" state when the measured temperature is higher than the operating temperature; indicates "not to be refrigerated" state for the refrigerating chamber when the measured temperature is lower than the preset closedown temperature; and keeps the current state of the refrigerating chamber when the measured temperature is between the preset closedown temperature and the operating temperature.

In the refrigerator according to the invention, when there are Y (Y≧1) refrigerating chambers to be refrigerated, basing on the units of time periods each time period in sequence will be distributed to a refrigerating branch, which selected by the controller in term of the predetermined rules to ensure that the branch, the compressor and the condenser can form a refrigerating circulation during that time period.

In the refrigerator according to the invention, when there are Y (Y≧1) refrigerating chambers to be refrigerated, each time period will be distributed to a refrigerating branch in the sequence of difference between the detected real temperature and set temperature of all the refrigerating chambers or in other sequences to ensure that the branch, the compressor and the condenser can form a refrigerating circulation during that time period.

In the refrigerator according to the invention, when there are Y (Y≧1) refrigerating branches to be refrigerated, in accordance with the preset priority sequence, the sequence of a refrigerating branch will be determined to ensure that the branch with higher priority, the compressor and the condenser can construct a refrigerating circulation within that time period.

In the refrigerator according to the invention, if the real time temperature of any refrigerating branch is lower than its preset shutdown temperature before the end of the time period, this time period will be terminated in advance and the refrigerating branch is indicated "not to be refrigerated"; if the real time temperature of any refrigerating branch is lower than its preset switching temperature that is higher than the shutdown temperature before the end of the above time period, and if there are other branches with "to be refrigerated", this time period shall be terminated in advance.

In the refrigerator according to the invention, the time periods are evenly distributed.

In the refrigerator according to the invention, the time periods are distributed unevenly, the distributed time period for each refrigerating branch can be decided by a preset static value based on the volume of the refrigerating chamber, or by a dynamic value based on the difference between the current temperature and the preset temperature of the refrigerating chamber, or by a value of the thermal load or the external environment and its changes of the refrigerating chamber.

In the refrigerator according to the invention, it further comprises variable frequency control devices used for controlling the rotary speed of compressor.

In the refrigerator according to the invention, the compressor and condenser refrigerating cycle comprises a suction tube and a dry filter.

A control method of a refrigerator with separated multi-way cooling circuit in parallel according to the present invention, comprises steps of: detect the real time temperatures of N refrigerating chambers, comparing them with their set temperatures, and determining the refrigerating branches to be refrigerated; connecting one of the determined refrigerating branches to the circulating loop for a time period; if the real time temperature of the refrigerating chamber reaches the preset shutdown temperature during this time period, the time period shall be terminated in advance.

In the method according to the present invention, the step of determining the refrigerating branches to be refrigerated comprises steps of: indicating the refrigerating chambers with a real time temperature higher than the startup temperature "to be refrigerated" state; indicating the refrigerating chambers with a real time temperature lower than the shutdown temperature "not to be refrigerated" state; remaining the current state of the refrigerating chambers with a real time temperature between the shutdown temperature and the startup temperature.

In the method according to the present invention, the step of determining the refrigerating branches to be refrigerated comprises step of: determining the refrigerating branch that corresponds with the refrigerating chamber in the state "to be refrigerated" as the refrigerating branch that require the circulation.

In the method according to the present invention, the step of determining the refrigerating branches to be refrigerated comprises steps of: when there are Y (Y≧1) refrigerating chambers to be refrigerated, a time period shall be distributed to the refrigerating branch of one of the refrigerating chambers in a decreasing sequence or an increasing sequence or any other sequence by the temperature differences between the currently detected real temperature and set temperature of every compartment, the refrigerating branch forms a refrigerating circulation with a compressor and a condenser within the distributed time period.

In the method according to the present invention, the step of determining the refrigerating branches to be refrigerated comprises steps of: when there are Y (Y≧1) refrigerating chambers in the state of "to be refrigerated", determining the sequence of the refrigerating branch according to the preset priority level order and make the refrigerating branch with a higher priority form a refrigerating circulation with the compressor and the condenser within the distributed time period.

In the method according to the present invention, further comprises steps of: during the time period when a refrigerating chamber is in the refrigerating circulation, if the real time temperature of this refrigerating chamber is detected reaching the preset switch temperature and there is other refrigerating chamber in the state of "to be refrigerated", this time period shall be terminated in advance.

In the method according to the present invention, the time periods are distributed evenly.

In the method according to the present invention, the time periods are distributed unevenly, the distributed time period of every refrigerating branch can be determined by the preset static value of the refrigerating chamber, or by the dynamic value of difference between the current temperature and preset temperature of the cold chamber, or by the thermal load or the external environment and its changes of the cold chamber.

In the method according to the present invention, further comprises step of when all the refrigerating chambers are in the state of "not to be refrigerated", the above compressor will be shut down.

The present invention through a single compressor cycle refrigerating system will achieve the objects: separately adjusting the temperatures in two or more refrigerating chambers of the refrigerator, shifting the mode of the refrigerating chambers mutually, and independently switch on or shutting down the refrigerating chambers. This make the present invention has advantages that traditional circulating cooling refrigerator cannot have. Its predominant advantages include: possessing multiple independent refrigerating chambers that can be decided by the user whether refrigeration is necessary; producing a separate temperature of every refrigerating chamber; saving futile power consumption for the unnecessary refrigeration; meeting different needs in usage by adjusting and determining the required volume of the temperature area by the user. It is hoped that the detached and multi-channel circulating cooling refrigerator would become the mainstream of the development of future refrigerators and could be popularized and applied widely.

### BRIEF DESCRIPTION OF THE DRAWINGS

Figure 1 is a principle schematic view of a refrigerator with separated multi-way cooling circuit in parallel according to the present invention.
Figure 2 is a structure schematic view of gas-liquid separation device located in a refrigeration circulation loop in the first embodiment of the invention.
Figure 3 is a structure schematic view of gas-liquid separation devices located in each paralleled refrigerating branch in the second embodiment of the invention.
Figure 4 is a structure schematic view of gas-liquid separation devices locating in a refrigeration circulation loop and part refrigerating branches, respectively in the third embodiment of the invention.
Figure 5 is a structure schematic view of a three-way valve realizing flow-control when N=2 in the fourth embodiment of the invention.
Figure 6 is the structure schematic view of a three-way valve realizing flow-control when N=3 in the fifth embodiment of the invention.
Figure 7 is a structure schematic view of three-way realizing flow-control when N=4 in the 6^{th} embodiment of the invention.
Figure 8 is a structure schematic view of three-way valve realizing flow-control when N=5 in the 7^{th} embodiment of the invention.
Figure 9 is a time-temperature schematic view in the first embodiment of the method according to the present invention.
Figure 10 is a time-temperature schematic view of in the second embodiment of the method according to the present invention.
Figure 11 is a flow chart of the control method of according to the present invention.
Figure 12 is a structure schematic view of a refrigerator with separated multi-way cooling circuit in parallel realized by indirect-cooling and direct cooling under the control of the method according to the present invention.
Figure 13 is the schematic diagram of the subsidiary refrigerating chamber using the controlling methods of the present invention.
Figure 14 is the structure schematic view that shows how to select and switch on one from N refrigerating chambers with N two-way valves.

### DETAILED DESCRIPTION OF THE PREFERRED EMBODIMENTS

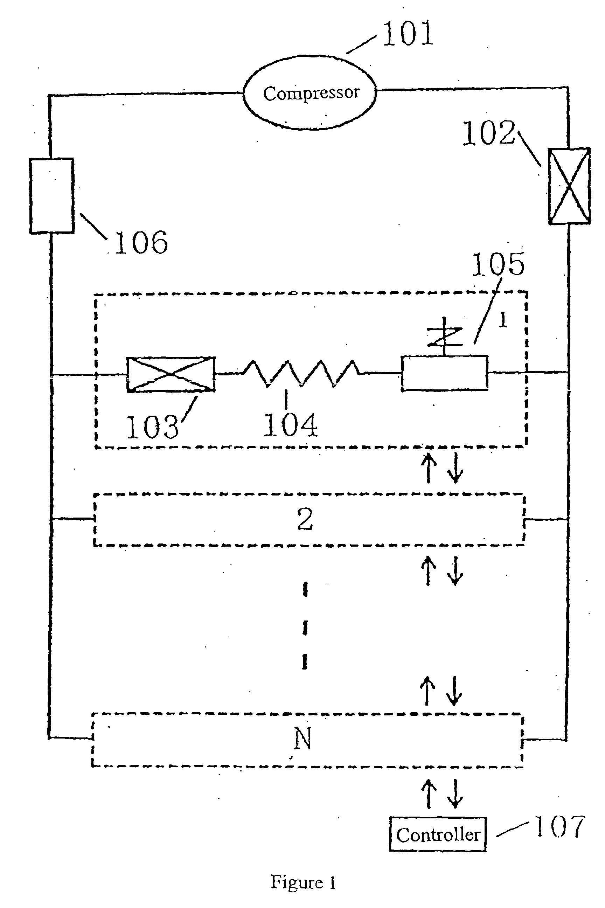

In the refrigeration circulation loop shown in figure 1, it includes N refrigeration branches and compressor 101, condenser 102 which form refrigeration cycle with only one of N branches at any time. Wherein, N is a natural number higher than 1. There are evaporator 103, throttling device 104 and flow-control device 105 in each of refrigeration branch. More important, the gas-liquid separation device 106 is also mounted in the refrigeration branch or circulation loop. In order to realize the separate control for each refrigerating chamber, the controller 107 which controls over N flow-control device 105 is also to be included. In the process of its realization, there are suction line and dry-filter (not shown) on the cycle of the compressor 101and condenser 102. The controller 107 is used to ascertain that only one in N refrigeration branches forms a refrigeration cycle with compressor and condenser at any time according to the actual temperature of each refrigerating chamber and the temperature set by users. Under the circumstances of N branches existing, there are N+1 states at most, namely, N states of the work by one branch and one state of no work by N branches in N branches.

In the different N+1 states, the following measures may be adopted in order to prevent the liquid-attack phenomenon of compressor: 1) To attach or increase the dimension of the gas-liquid separation device; 2) To adjust the inner dimension of the evaporator properly; 3) To optimize the filling capacity of refrigerant and give a full consideration to the configuration of multiple operating states; 4) To optimize the throttling device.

The refrigerating chamber referred in this present invention means a refrigerating storage space with chambers, which can be in the form of drawers, cavities with a door or other forms.

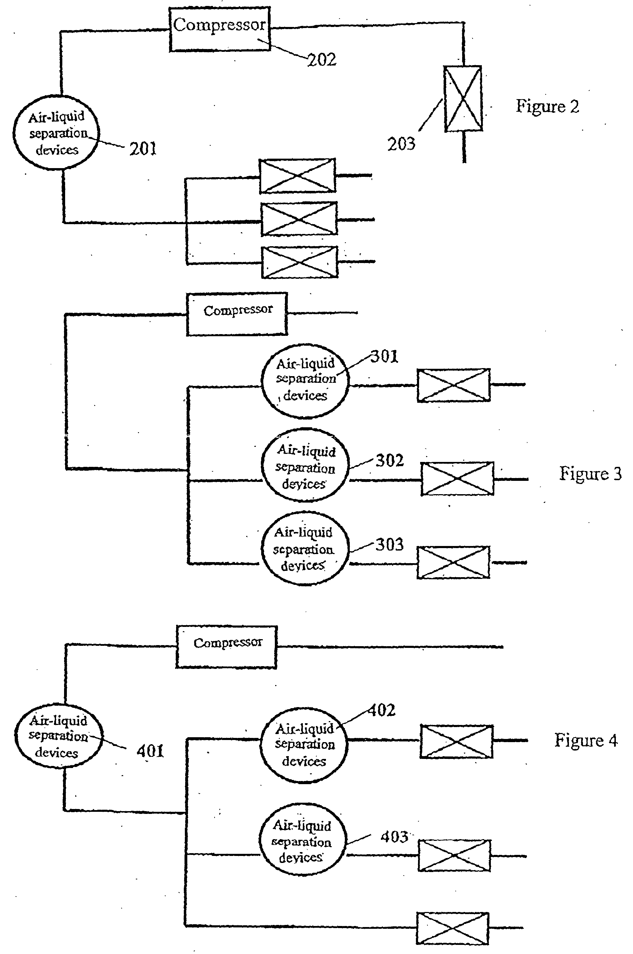

Figure 2 shows a general situation of the gas-liquid separation device 201 mounted on general loop of the compressor 202 and condenser 203. Figure 3 shows what the gas-liquid separation devices 301, 302, 303 mounted on the three branches respectively. And figure 4 shows the gas-liquid separation device mounted on the general circulation loop and part of the refrigeration branches, wherein, the gas-liquid separation device 401 is fixed in the general circulation loop, gas-liquid separation devices 402 and 403 are fixed in two branches respectively. Mounting these gas-liquid separation devices is to avoid ice (frost) formation at the suction line of compressor or resulting in liquid-attack of compressor and to ensure the normality and safety of refrigerant and compressor under any working conditions.

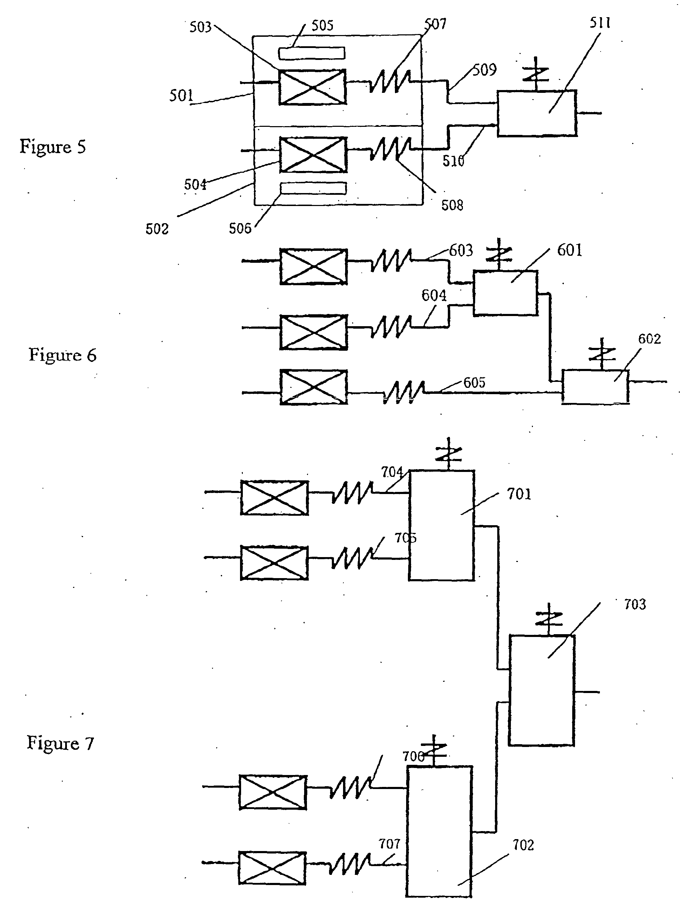

Figure 5 shows a structure of the refrigerator when N=2. Shown as figure 5, the refrigerator has two refrigerating chambers which can work independently, namely the first refrigerating chamber 501 and the second refrigerating chamber 502. The first evaporator 503 and the second evaporator 504 as cold source, as well as the first temperature sensor 505 and the second temperature sensor 506 as the detection of refrigerating state are mounted separately in the first refrigerating chamber 501 and the second refrigerating chamber 502. The First refrigerating branch 509 includes the first evaporator 503 and the first capillary tube 507 as a throttling device with which it connects in series manner. The second refrigerating branch 510 includes the second evaporator 504 and the second capillary tube 508 as a throttling device with which it connects in series manner. According to the temperatures of the two refrigerating chambers set by users and the numerical values of the first temperature sensor 505 and the second temperature sensor 506, the controller determines the formation of refrigerating cycle whether by the first refrigeration branch 509 or second refrigeration branch 510 with compressor, condenser, dry filter, suction line and gas-liquid separation device. Such 'One select from two' is realized through a two-position three-way electromagnetic valve 511. In other words, the flow control devices in first and second refrigeration branches are realized through a two-position three-way electromagnetic valve 511.

Compared with the traditional double-door refrigerators, this double-chambers refrigerator overcomes the following three shortcomings of the former: 1) the refrigerating chamber and the freezing room must work simultaneously; 2) the operating temperatures of the refrigerating chamber and freezing room are inter-relative; and 3) the functions of refrigerating chamber and freezing room may not be exchanged. The operation principle is described as below:
1) Selecting one refrigerating chamber to work, the other one does not work: when setting the working of the first refrigerating chamber 501 and the idling of the second refrigerating chamber 502, the first refrigerating branch 509 can all the time be on by controlling the electromagnetic valve 511. At this time, the startup or stop of compressor depends on whether the temperature of the first refrigerating chamber 505 reaches the wanted temperature set by user, that is, the temperature of the first refrigerating chamber will make refrigerating circuit 509 work when it reaches the operating temperature, and the first evaporator 503 starts refrigerating. While the temperature of the first refrigerating chamber 505 is lower than the shutdown temperature it closes down the refrigerating cycle 509 and even the compressor will be shut off. Vice versa, when the second refrigerating chamber is required to work and the first idle, just connect the second refrigerating branch 510 by controlling three-way electromagnetic valve 511. At this time, the start or stop of compressor depends upon whether the temperature of the second refrigerating chamber 502 reaches the wanted temperature or the continual work-time of compressor reach the specified values.
2) Setting a temperature of two refrigerating chambers at wills: user can set the operating temperature of any one of the first and the second refrigerating chamber between -36 and +10 □. The detailed controlling methods will be given in the next. To reach the temperature set by users, you can control the 3-way valve 511 to switch between the first branch 509 and the second branch 510 on time basis.
3) Setting the two refrigerating chambers as refrigerating chamber or freezing room at the same time. Just set these two to have an identical or close operating temperature. The process is the same as above.

This present invention may maximize the evaporating area and improve the area and the efficiency of heat exchange that thanks to its paralleling of evaporators of refrigerator and freezer setting in a traditional double-door refrigerator in a refrigerating cycle, this make it simply mount and without considering the configuration thereof. The two branches of refrigerating and chilling can operate independently and save the futile power consumption according to the principle of time-sharing control provided by the invention. Users may close the refrigerating chamber or the freezing room in accordance with the change of seasons and their own habits. And meanwhile, the system can further save energy by use of the energy-saving parts, for instance, using 2-stable electromagnetic valve (pulse control) can save the power consumption a common electromagnetic valve wastes in maintaining its state. Comparing with traditional double-door refrigerators, the present invention can not only avoid futile power consumption but also close the refrigerating chamber or the freezing room separately, thus achieving the dual energy-saving purposes.

Figure 6 shows a structure diagram of a refrigerator when N=3 of the present invention. Unlike the former embodiment, the flow-control devices in the three refrigerating branches are realized by two two-position three-way valves 601and 602, which is to ensure that only the evaporator of one of three branches 603, 604 and 605 is refrigerating at any time, and distributing the refrigeration capacity to every branch in the time-sharing way when the other two refrigerating chambers need to be refrigerated. If users only require one of these refrigerating chambers to work and the other two refrigerating chambers are idle or just used for storage space, in this case, the two three-way valves are set to a position where the refrigerating branch forms cycle with compressor and condenser; If users require two of the refrigerating chambers to work, just switch on the two branches one after another by controlling two three-way valves, and if users demand the three refrigerating chambers work simultaneously, the three branches can be switched on one after another using the controlling method. The switching-on order of the respective branch, the length of switch-on time depend on the temperature set by users, the temperature of refrigerating chamber measured at real time as well as the controlling strategy.

Figure 7 shows a structure diagram of the refrigerator when N=4 in the present invention, the flow-control devices located in four refrigerating branches 704, 705, 706, 707 are realized by 3 two-position three-way valves 701,702 and 703. At any time, only one of the four branches 704-707 forms refrigerating cycle with compressor, condenser, etc. When more than one refrigerating chamber is needed to be refrigerated, controlling the cold source distributing in it by the means of time-sharing.

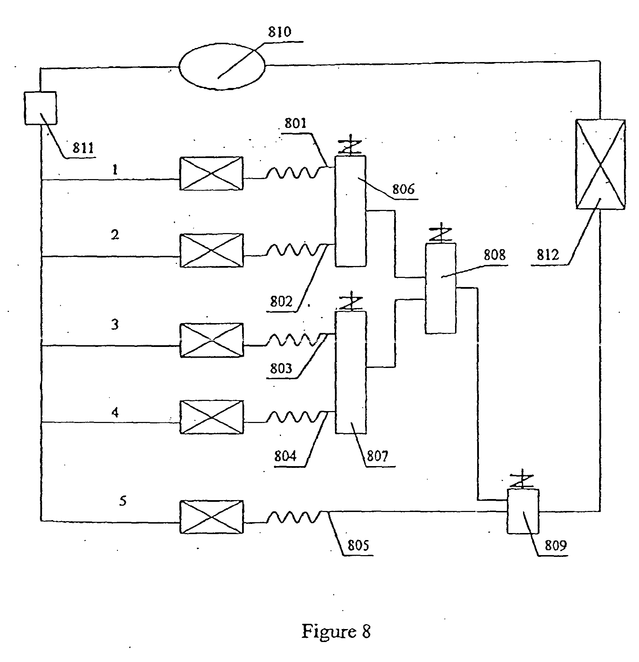

Figure 8 shows a structure diagram of the refrigerator when N=5 in the present invention. Shown as figure 8, the flow-control devices in five refrigerating branches 801-805 are realized by 4 two-position three-way valves 806-809. At any time, only one of the five branches 801-805 forms refrigerating cycle with the compressor 810, the condenser 812, the gas-liquid separation device 811. But in a longer period of time, each refrigerating chamber can refrigerate to the operating temperature ranging from -36 to +10□ set by user, namely T_{i off}<Tᵢ<T_{i on} , ( I=1,2,3,4,5 ) , in which T_{i off} = Tᵢₛₑₜ-Δi,Tᵢ ₒₙ= T_{i set} +Δi, in which T_{i off} is the closedown temperature of refrigerating chamber I, the lower limit of operating temperature range. T_{i set} is the user-set temperature of refrigerating chamber I, T_{i on} is the operating temperature of refrigerating chamber I, the upper limit of the operating temperature range, Δi embodies the temperature-control precision of the refrigerating chamber I. The greater Δi is , the less sensitive toward the changes of temperature it is and the lower the controlling precision.

Under the circumstances of N in a higher value, a frequency switch controller can be fixed, according to the proportion of space-occupation of switching-on by each refrigerating branch to control the rotate speed of compressor so as to achieving better effect of energy saving.

The following combines with the examples to show how the controlling method of the invention to distribute the refrigerating capacity among N refrigerating branches in a time-sharing way. The distribution guideline is narrated one by one:

### 1) The refrigerating state of refrigerating chamber and its changes:

As the basis for determining cyclic refrigerating chambers, the invention method sets two kinds of refrigerating states for each refrigerating chamber, that are "to be refrigerated" and "not to be refrigerated". The refrigerating chamber in which the measured temperature is higher than the operating temperature is indicated as "to be refrigerated" state; The refrigerating chamber in which the measured temperature is lower than the set closedown temperature is described as "not to be refrigerated" state; and the refrigerating chamber in which the measured temperature is higher than the set closedown temperature and is lower than the operating temperature is described as the current state. In this way, shutting down the compressor when all the refrigerating chambers are in the state of "not to be refrigerated ". At the same time, determining to choose the scope of refrigeration cycle according to the current number of refrigerating chambers in the state of "to be refrigerated", namely at any time, selecting the refrigerating chambers of refrigeration cycle just in the refrigerating chambers of "to be refrigerated".

### 2) Principle of precedence-level distribution

At a time when more than one refrigerating chambers in the state of "to be refrigerated", that is, when the cold sources collide, the order of cold source distribution is determined according to the precedence level. For example, in the double-refrigerating chamber, the first refrigerating chamber can be selected to be always in priority when the two refrigerating chambers work at the same time, in this way, so long as the first refrigerating chamber needs refrigeration, the first refrigerating branch will be supplied for cold sources. Only when the first refrigerating chamber reaches the closedown temperature, it will distribute the cold source to other refrigerating branches. When there are more than 2 refrigerating chambers, such precedence level as refrigerating chamber 1, 3, 2 or others can be set to determine the order of cold source supply: refrigerating chamber 1 first, and then refrigerating chamber 3, finally refrigerating chamber 2. At any time, only when the branch with higher precedence level needs refrigeration can the refrigeration of the branches with lower level be interrupted. But the branches with lower level needing refrigeration can switch on the refrigeration cycle of compressor and condenser only when the branches with higher level are disengaged (at the closedown temperature).

### 3) Principle of even distribution of time

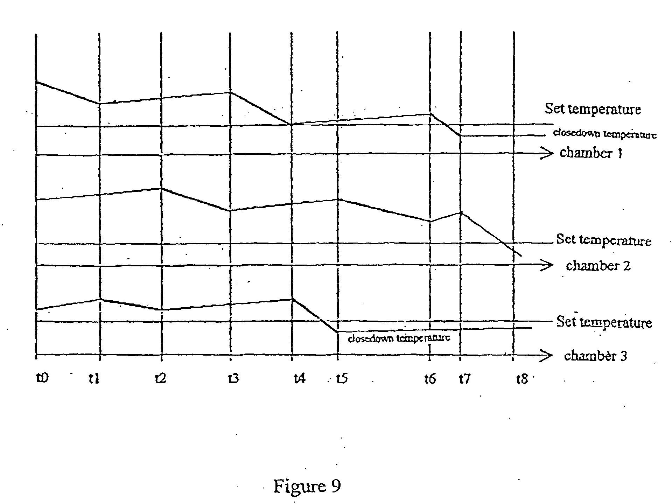

As far as the multi-way cycle is concerned, the cold sources shall be distributed to cover different situations and the refrigeration requirements for the refrigerating chamber shall be considered in order that each refrigerating chamber can reach or keep the set temperature as soon as possible, particularly the operation of a new purchase or startup after electricity suspension. Therefore, there would be problems to simply adopt the priority to determine the distribution of cold sources. For instance, the refrigerating chambers with higher priority occupies too much time for cold sources, and which the refrigerating chambers with lower priority would not be able to be timely refrigerated or maintain a temperature for quite a long time. So, a strategy of cold source supply based on time period is putted forth. The time period can be distributed equally. Supposing there are N refrigerating chambers to be refrigerated, the longest continual work-time of compressor is T, the length of time period for every refrigeration branch by the order is K*T/N, K is the space-occupation coefficient, K<1. Combining with the principle of above-said priority, the controlling process as shown in figure 9.

In the figure 9, there are three refrigerating chambers in which the priority order as refrigerating chamber 1, refrigerating chamber 3 and refrigerating chamber 2. Refrigerating chambers 1, 2, 3 need refrigeration (the real-time temperature indicated by solid line is above the set temperature indicated by broken line) after electricity suspension and startup. In this way, the first branch is put through and cycles between 0-t1 and switches on for the refrigerating chamber 1 for 3 minutes, and the refrigerating chamber 3 for 3 minutes between t1-t2, and then between t2-t3 scope, switch on for the refrigerating chamber 2 for 3 minutes. Because refrigerating chamber 1 does not reach the closedown temperature, the refrigerating chamber 1 is again supplied cold source between t3-t4 scope and so is the refrigerating chamber 3 between t4-t5 scope. Here, since the refrigerating chamber 3 has reached the closedown temperature and terminated the cycle of time period in t5 in advance, which the length of time between t4-t5 is less than the prescribed time. At this time, only the refrigerating chambers 1 and refrigerating chamber 2 is still to be refrigerated. During t5-t6, cold source supply is provided in the refrigerating chamber 2 for 3 minutes. After that, the cold source is fed to the refrigerating chamber 1. Because the temperature of the refrigerating chamber 1 has reached the closedown temperature, it would terminates the time period in advance (the length of time between t6-t7 is less than the prescribed time), and continue to supply cold source to the refrigerating chamber 2 in t7-t8. So it goes on till the temperatures of three refrigerating chambers fluctuates between the set temperature range so as to control independently the temperature of all refrigerating chambers.

### 4) Principle of static uneven distribution of time period

Since the cubage of refrigerating chambers is fixed, its unequal distribution coefficient can be determined in advance according to its cubage, that is, the length of time period distributed in different times is different. For instance, the time period coefficient connecting N refrigerating chambers can be set as S1, S2.....SN, the longer the time is needed, the greater S is. For example, greater coefficients can be set for the larger refrigerating chambers. And every cycle can be set for 30 time units, namely 30s. Since there are 4 refrigerating chambers, the correspondent pre-distribution time can be distributed to and expressed as 10s, 8s ,6s and 6s.

### 5) Principle of dynamic distribution principle of time period

According to the difference between the real-time temperature and the set temperature, we can determine which refrigerating branch to be connected first. When more than one refrigerating chambers reach the operation temperature and need to be refrigerated, the refrigerating chamber with a greater difference between the real-time and the set temperatures is given priority to refrigeration. And vice versa, to select the refrigerating chamber with a less difference between the real-time and the set temperature to refrigerate first. We can also choose other standards for this purpose.

### 6) Principle of the time period control based on temperature switching

Based upon the principle of time-sharing of time period, a control strategy called switching temperature added to ensure that those branches to be refrigerated can get timely response from the refrigeration cycle. The switching temperature is that, when a refrigerating chamber reaches a temperature, while the other refrigerating chambers still need to be refrigerated, switching the cold source out of the refrigerating chamber to the refrigerating chamber needing chill. For instance, when the set temperature of the first refrigerating chamber and the second refrigerating chamber are -20 degree and +5 degree, respectively , it would take quiet a long time to reach its closedown temperature if the first refrigerating chamber given priority; and if the switching temperature is set, the second refrigerating chamber will get fully refrigeration capacity timely.

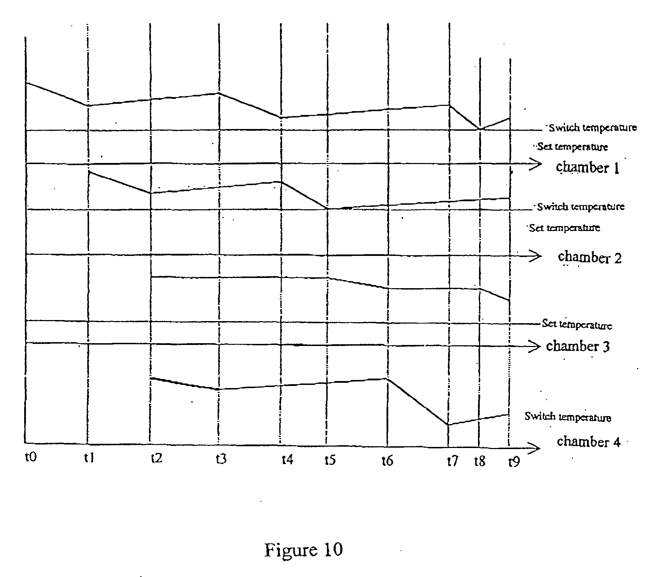

Figure 10 shows a example of the above method. There are 4 refrigerating chambers, of which the refrigerating chamber 3 has a set temperature only after t2, and before it, only refrigerating chambers 1, 2 and 4 have been set with temperatures. When no priority difference exists, the time length for refrigeration of refrigerating chamber 1 is specified in 0-t1; in t1-t2, refrigerating time length of refrigerating chamber 2 is specified; in t2-t3, that of refrigerating chamber 4 is specified. After t3, since refrigerating chamber 3 need to be refrigerated, it gets the turn of refrigerating. In t3-t4, the refrigeration in refrigerating chamber 1 will go on. In t4-t5, refrigerate the refrigerating chamber 2 to reach the switching temperature. Here, this time period ends ahead of time. In t5-t6, supply cold to refrigerating chamber 3. In t6-t7, supply cold to refrigerating chamber 4 to reach the switching temperature, so, this time period ends ahead of time. In t7-t8, refrigerate the refrigerating chamber 1 to reach the switching temperature and the time period ends ahead of time. In t8-t9, refrigerate refrigerating chamber 3. Unlike the controlling strategy in figure 9, it can terminate the preset time period ahead of time when reaching the switching temperature so that other refrigerating chambers would be given more chances to refrigerate. Setting a switching temperature of the refrigerating chamber is to aim at providing a solution to start up the refrigeration of more than one refrigerating chambers from the room temperature. At this time, if the set temperature is below zero degree, such as -10 □, the switching temperature can be set into a value (0 □) higher than the startup temperature (-9 □). The switching temperature is possible only when there are other refrigerating chambers which "to be refrigerated". If there is no other refrigerating chamber which "to be refrigerated", there will be no switching of the refrigerating state for the current refrigerating chambers.

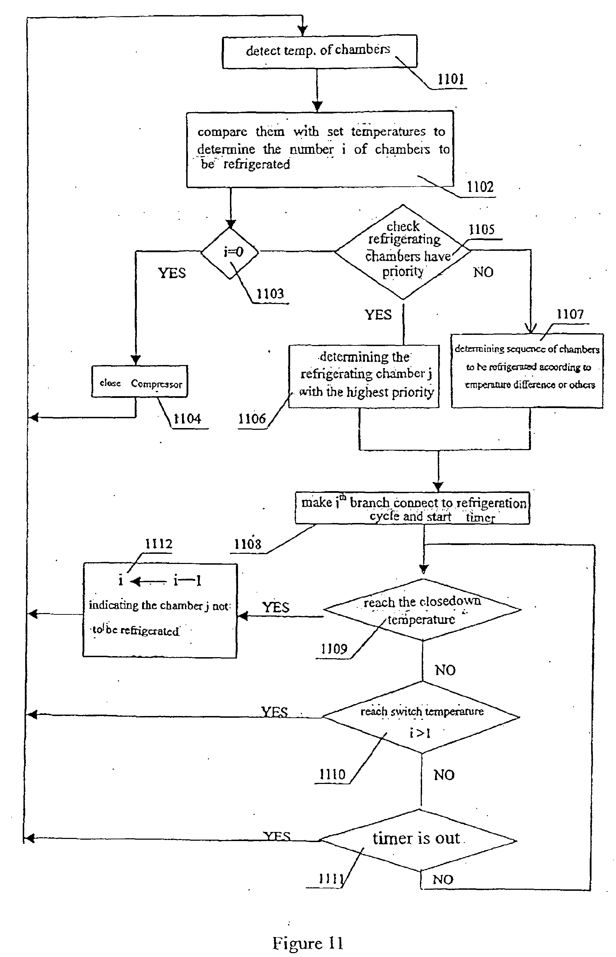

Referring to figure 11 showing a flow chart of a controlling methods of a refrigerator of this present invention. In block 1101, the temperatures of different refrigerating chambers are detected. In block 1102, comparing the measured real-time temperatures with the pre-set temperatures to determine the current number of refrigerating chambers i, which "to be refrigerated", and judging whether i is equal to 0 in block 1103, if i=0, all the refrigerating chambers are in the state of "not to be refrigerated", thus compressor in block 1104 can be closed; If i ≠0, that is, there is one or more refrigerating chambers which "to be refrigerated", then judging whether each refrigerating chamber has priority. If priority is given, determining the refrigerating chamber j to be the top priority of refrigerating in block 1106. If priority is not given, determining in block 1107 the priority to refrigerate the refrigerating chamber j according to the temperature difference or other standard. In block 1108, controlling the flow-control device to connect the refrigerating chamber j branch to refrigeration cycle and starting to measure time period. In block 1109, to judge whether the j^{th} branch reaches the closedown temperature and if it is equal to or lower than the closedown temperature, the refrigerating chamber should be set as "not to be refrigerated" state and back to block 1101; If it does not reach the closedown temperature, to judge whether the real-time temperature reaches the switching temperature, and meanwhile, I >1(other refrigerating chambers are still in the state of "to be refrigerated"); if yes, it enters block 1101; otherwise, to judge in block 1111 whether the timing stops; if yes, it enters block 1101; if no, it enters block 1109.

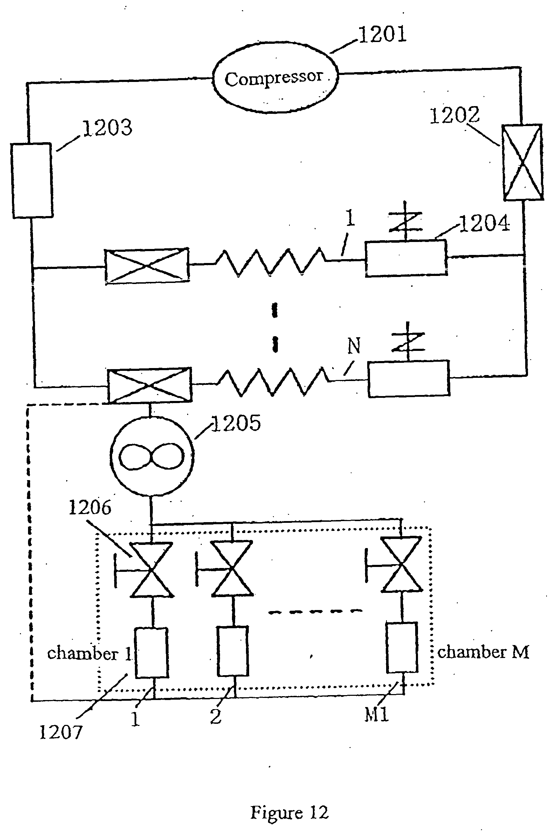

Figure 12 shows a structure schematic view of an independent multi_cycle refrigerator realized by indirect-cooling and direct-cooling under the control of the method according to the present invention, the refrigerator comprises a compressor 1201, a condenser 1202, a gas-liquid separator 1203 and branch 1204 connected with N direct cooling; each branch has evaporators (not labeled), throttling devices (not labeled) and flow-controlling devices (not labeled), and the flow-controlling devices locating in the N branches can be realized by N-1 two-position three-way valves.

If the evaporator of each branch is distributed to one refrigerating chamber, there can be formed N refrigerating chambers. When N+M refrigerating chambers are required, we can use air cooling to realize the independent refrigeration of M refrigerating chambers. Referring to figure 12 showing that a group of M1 air cooling chambers are mounted on the i^{th} branch. Specifically, fan 1205 is fixed near the evaporator of the i^{th} branch. Each air cooling chamber associated with the i^{th} branch is mounted with airflow controlling device 1206 (damper), refrigerating chamber 1207 as well as refrigerating chamber temperature sensor (not shown). When there are refrigerating chambers among this group of the refrigerating chambers to be refrigerated, the ith branch can be controlled and connected to refrigerate (if the i^{th} branch has been in the state of refrigeration, it needs no change), and meanwhile start fan 1205 (do not start it again if it has been started) and the airflow controlling device 1206 corresponding with it. When the refrigerating chamber temperature reaches that of closedown, close the airflow controlling device 1206 from which the refrigerating chamber is separated. When M1 refrigerating chambers of this group has reached the closedown temperature, close fan 1205 and stop refrigerating of the ith branch.

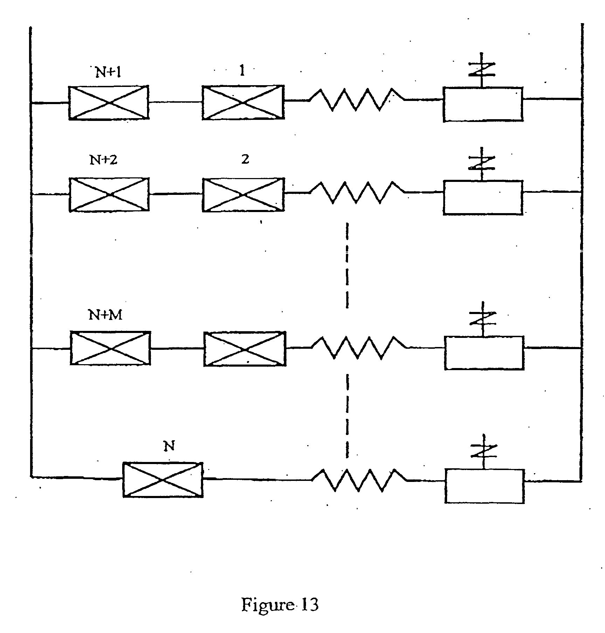

Figure 13 shows that on the N paralleled branches as shown in figure 1, in series with evaporators on one of branches or several branches. If M evaporators are serially connected, and each of which is mounted in one refrigerating chamber, totally N+M refrigerating chambers can be provided, among which there are M non-independent controlled refrigerating chambers. Here, supposing that in the branches with evaporators serially connected, the refrigerating chambers whose temperature sensors are controlled according to their values can be controlled by temperature, otherwise, they are the subsidiary refrigerating chambers that can not be independently controlled. Through connected evaporators in series on the main refrigerating branches on the paralleled branch, more refrigerating chambers can be formed with simple control to form a multi-temperature refrigerator with an independent refrigerating chambers as main body and a subsidiary refrigerating chambers as complement.

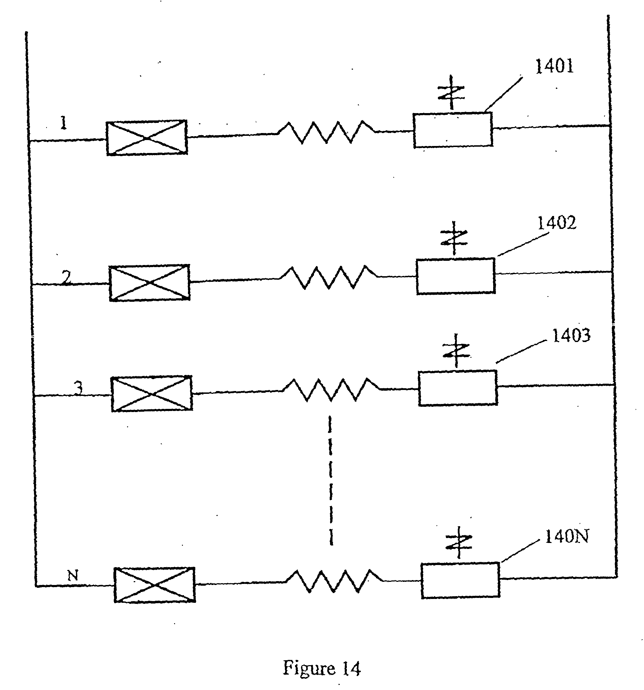

Referring to figure 14 showing a refrigerator which realizes to "select one from N" with N two-way valves 1401-140N. If it needs to control the cooling of the i^{th} refrigerating chamber, just to provide connecting signals to the two-way valve of ith branch and closedown signals to the other N-1 two-way valves. For example, the operations needed to switch to the j^{th} branch from the i^{th} branch are: to provide "switch off" signal to the two-way valve on the i^{th} branch, and "switch on" signal to the j^{th} branch. In other words, each switching needs only two steps, one is to "switch off', the other to "switch on". While, for the N-1 three-way valves which adopts two Y-shaped tree structure, the maximum number of operation times depends upon the number of the layers of the tree. To the two-layer tree structure which can control 4 branches, the maximum number of operation times is 2, to the three-layer tree structure which can control 8 branches, the maximum number of operation times is 3, and so on and so forth.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A refrigerator with separated multi-way cooling circuit in parallel, comprises a circulating loop defined by compressor and condenser, N (N>1) refrigerating chambers and N refrigerating branches in parallel connection with one another and in series connection with the circulating loop, each of the N refrigerating branches is in series connection with a flow control unit, throttling device, and evaporator, said refrigerator further comprise one or more gas-liquid separation devices to avoid frosting of the suction line of the compressors and causing liquid slugging of the compressors in the compressor cycles; said refrigerator further comprise a controller which controls the flow control unit in every refrigerating branch to achieve only one refrigerating branch connect with the cycle defined by the compressor and the evaporator, and realizes a time-sharing separate operation of every refrigerating chamber.

2. The refrigerator as claimed in claim 1, further comprises M indirect-cooling refrigerating chambers independent mutually; wherein each indirect-cooling refrigerating chamber has one air flue with air volume control devices; and the M air flues are divided into X groups; these groups and the evaporators and fans in X of N separate refrigerating branches construct X groups of air passages; the controller controls the flow control units in N refrigerating branches, M air volume control devices, and X fans to guarantee that N+M refrigerating chambers keep their independent controllable temperatures.

3. The refrigerator as claimed in claim 2, wherein each group of air flue at least comprises one air flue, and all air flues shall be parallel mutually.

4. The refrigerator as claimed in claim 1, further comprises L subordinate refrigerating chambers, each of which has an evaporator in series connection with one of the N refrigerating branches, the L subordinate refrigerating chambers and the N independent paralleled refrigerating chambers can form N+L temperature-controlled refrigerating chambers.

5. The refrigerator as claimed in claim 2 or claim 3, further comprises L subordinate refrigerating chambers, each of which has an evaporator in series connection with one of the N refrigerating branches, the L subordinate refrigerating chambers, N independent paralleled refrigerating chambers, and M indirect-cooling refrigerating chambers can form N+L+M temperature-controlled refrigerating chambers.

6. The refrigerator as claimed in one of claim 1 to claim 5, wherein the gas-liquid separation devices locate in the circulating loop.

7. The refrigerator as claimed in one of claim 1 to claim 5, wherein the gas-liquid separation devices locate in each of the parallel refrigerating branches respectively.

8. The refrigerator as claimed in one of the claim 1 to claim 5, wherein the gas-liquid separation devices locate separately in the circulating loops and part of the refrigerating branches.

9. The refrigerator as claimed in one of claim 1 to claim 3, wherein every refrigerating chamber is equipped with a temperature sensor.

10. The refrigerator as claimed in one of claims 1-9, wherein the compressors has a refrigerating capacity Q which can satisfy the following relationship: the total sum of maximal startup time of all the refrigerating chambers (Tᵢₒₘₐₓ) shall not exceed the minimum of the shutdown time (Tᵢₛₘᵢₙ) of all the refrigerating chambers (Tᵢₛₘᵢₙ), i.e. Σ Tᵢₒₘₐₓ≦Tᵢₛₘᵢₙ.

11. The refrigerator as claimed in claim 10, wherein whenΣTᵢₒₘₐₓ>Tᵢₛₘᵢₙ, one or more of the following adjustments can be chosen to satisfy the formula ΣTᵢₒₘₐₓ≦Tᵢₛₘᵢₙ: 1) increasing the thermal insulation layer of those refrigerating chambers with shorter shutdown time or all the chambers; 2) increasing the area of evaporators in the compartments; 3) properly lowering the temperature control precision of those compartments with shorter shutdown time.

12. The refrigerator as claimed in one of claims 6-9, the controllers provide controlling signals for the flow control units in all the refrigerating branches so that at most one refrigerating branch, the compressor and condenser circuit form a refrigerant cycle at any time on the basis of the real time temperature provided by the temperature sensors in N refrigerating chambers and the temperatures of all the refrigerating chambers preset by customers.

13. The refrigerator as claimed in claim 12, wherein the flow control units locating in the N refrigerating branches are composed of N-1 two-position three-way valves layered in the form of binary tree structure, the roots of "trees" connect to the circulating loops and N node of the "tree" connect to the throttling devices located in N refrigerating branches respectively.

14. The refrigerator as claimed in claim 12, wherein the flow control units located in the N refrigerating branches are composed of N two-way valves that are in series connection with the respective branch.

15. The refrigerator as claimed in claim 12, wherein the flow control units located in the N refrigerating branches are actualized by valves or valve mixes that have the function of selecting one branch from N branches.

16. The refrigerator as claimed in one of claims 1-15, wherein when N equals to 2, only the evaporator and the throttling device in one of the two branches form a refrigerating circulation with the compressor and the condenser at any time.

17. The refrigerator as claimed in one of claims 1-15, wherein when N equals to 3, only the evaporator and throttling device in one of the three branches form a refrigerating circulation with the compressor and condenser at any time.

18. The refrigerator as claimed in one of claims 1-15, wherein when N equals to 4, only the evaporator, throttling device in one of the four branches form a refrigerating circulation with the compressor and the condenser at any time.

19. The refrigerator as claimed in one of claims 1-15, wherein when N equals to 5, only the evaporator and throttling device in one of the five branches form a refrigerating circulation with the compressor and the condenser at any time.

20. The refrigerator as claimed in one of claims 1-15, wherein each refrigerating chamber comprises a state indicator, which indicates the refrigerating chamber "to be refrigerated" state when the measured temperature is higher than the operating temperature; indicates "not to be refrigerated" state for the refrigerating chamber when the measured temperature is lower than the preset closedown temperature; and keeps the current state of the refrigerating chamber when the measured temperature is between the preset closedown temperature and the operating temperature.

21. The refrigerator as claimed in claim 20, wherein when there are Y (Y≧ 1) refrigerating chambers to be refrigerated, basing on the units of time periods each time period in sequence will be distributed to a refrigerating branch selected by the predetermined rules to ensure that the branch, the compressor and the condenser can form a refrigerating circulation during that time period.

22. The refrigerator as claimed in claims 20 or claim 21, wherein when there are Y (Y≧1) refrigerating chambers to be refrigerated, each time period will be distributed to a refrigerating branch in the sequence of difference between the tested real temperature and set temperature of all the refrigerating chambers or in other sequences to ensure that the branch, the compressor and the condenser can form a refrigerating circulation during that time period.

23. The refrigerator as claimed in one of claims 20-22, wherein when there are Y (Y≧1) refrigerating branches to be refrigerated, in accordance with the preset priority sequence, the sequence of a refrigerating branch will be determined to ensure that the branch with higher priority, the compressor and the condenser can construct a refrigerating circulation within that time period.

24. The refrigerator as claimed in one of claims 20-23, wherein if the real time temperature of any refrigerating branch is lower than its preset shutdown temperature before the end of the time period, this time period will be terminated in advance and the refrigerating branch is indicated "not to be refrigerated"; if the real time temperature of any refrigerating branch is lower than its preset switching temperature that is higher than the shutdown temperature before the end of the above time period, and if there are other branches with "to be refrigerated", this time period shall be terminated in advance.

25. The refrigerator as claimed in one of claims 20-24, wherein the time periods are evenly distributed.

26. The refrigerator as claimed in one of claims 20-25, wherein the time periods are distributed unevenly, the distributed time period for each refrigerating branch can be decided by a preset static value based on the volume of the refrigerating chamber, or by a dynamic value based on the difference between the current temperature and the preset temperature of the refrigerating chamber, or by a value of the thermal load or the external environment and its changes of the refrigerating chamber.

27. The refrigerator as claimed in one of claims 1-26, further comprises variable frequency control devices used for controlling the rotary speed of compressors.

28. The refrigerator as claimed in one of claims 1-26, wherein the compressor and condenser refrigerating cycle comprisers a suction line and a dry filter.

29. A control method of a refrigerator with separated multi-way cooling circuit in parallel, comprises steps of: detect the real time temperatures of N refrigerating chambers, comparing them with their set temperatures, and determining the refrigerating branches to be refrigerated; connecting one of the determined refrigerating branches to the circulating loop for a time period; if the real time temperature of the refrigerating chamber reaches the preset shutdown temperature during this time period, the time period shall be terminated in advance.

30. The method as claimed in claim 29, wherein the step of determining the refrigerating branches to be refrigerated comprises steps of: indicating the refrigerating chambers with a real time temperature higher than the startup temperature "to be refrigerated" state; indicating the refrigerating chambers with a real time temperature lower than the shutdown temperature "not to be refrigerated"; remaining the current state of the refrigerating chambers that have a real time temperature between the shutdown temperature and the startup temperature.

31. The method as claimed in claim 30, wherein the step of determining the refrigerating branches to be refrigerated comprises step of: determining the refrigerating branch that corresponds with the refrigerating chamber in the state "to be refrigerated" as the refrigerating branch that require the circulation.

32. The method as claimed in claim 31, wherein the step of determining the refrigerating branches to be refrigerated comprises steps of: when there are Y (Y≧1) refrigerating chambers to be refrigerated, a time period shall be distributed to the refrigerating branch of one of the refrigerating chambers in a decreasing sequence or an increasing sequence or any other sequence by the temperature differences between the currently detected real temperature and set temperature of every compartment , the refrigerating branch forms a refrigerating circulation with a compressor and a condenser within the distributed time period.

33. The method as claimed in claim 31, wherein the step of determining the refrigerating branches to be refrigerated comprises steps of: when there are Y (Y≧1) refrigerating chambers in the state of "to be refrigerated", determining the sequence of the refrigerating branch according to the preset priority level order and make the refrigerating branch with a higher priority form a refrigerating circulation with the compressor and the condenser within the distributed time period.

34. The method as claimed in one of claims 32 and 33, further comprises steps of: during the time period when a refrigerating chamber is in the refrigerating circulation, if the real time temperature of this refrigerating chamber is detected reaching the preset switch temperature and there is other refrigerating chamber in the state of "to be refrigerated", this time period shall be terminated in advance.

35. The method as claimed in one of claims 29-34, wherein the time periods are distributed evenly.

36. The method as claimed in one of claims 29 to cliam 34, wherein the time periods are distributed unevenly, the distributed time period of every refrigerating branch can be determined by the preset static value of the refrigerating chamber, or by the dynamic value of difference between the current temperature and preset temperature of the cold chamber, or by the thermal load or the external environment and its changes of the cold chamber.

37. The method as claimed in one of claims 29-34, further comprises step of when all the refrigerating chambers are in the state of "not to be refrigerated", the above compressor will be shut down.
